# EUROPEAN PATENT SPECIFICATION

(11) **EP 1 338 577 B1**
(45) Date of publication and mention of the grant of the patent: **19.04.2006**
(21) Application number: 03003915.0
(22) Date of filing: 26.02.2003
(51) Int. Cl.: C04B 28/02, C04B 28/04, C04B 18/24

(54) **A composition made of cement and insulating materials of various kind and process for manufacturing thereof**
Mischung aus Zement und isolierenden Materialien verschiedener Arten und Herstellungsverfahren hierfür
Composition de ciment et matériaux isolants de divers types et méthode de fabrication pour celle ci

(30) Priority: 26.02.2002 IT PN20020011; 17.07.2002 IT PN20020055
(43) Date of publication of application: 27.08.2003
(73) Proprietor: Fregonese, Sergio, 31045 Motta di Livenza (IT); Spagni, Pietro, 42100 Reggio Emilia (IT); Pelusi, Claudio, Campegine, RE (IT); Caroli, Paolo, 42100 Reggio Emilia (IT); Bonazzi, Federico, 42100 Reggio Emilia (IT)
(72) Inventor: Fregonese, Sergio, Motta Di Livenza TV (IT)
(74) Representative: Dalla Rosa, Adriano

(56) References cited:
- EP-A- 0 103 195
- WO-A-98/55282
- DE-C- 4 132 009
- FR-A- 2 700 162
- GB-A- 324 652
- GB-A- 567 297
- US-A- 5 637 362
- US-A- 5 851 281
- "CHEMICAL ABSTRACTS + INDEXES, AMERICAN CHEMICAL SOCIETY. COLUMBUS, US" , CHEMICAL ABSTRACTS + INDEXES, AMERICAN CHEMICAL SOCIETY. COLUMBUS, US XP000192525 ISSN: 0009-2258 * abstract *
- "CHEMICAL ABSTRACTS + INDEXES, AMERICAN CHEMICAL SOCIETY. COLUMBUS, US" , CHEMICAL ABSTRACTS + INDEXES, AMERICAN CHEMICAL SOCIETY. COLUMBUS, US XP000156855 ISSN: 0009-2258 * abstract *
- "CHEMICAL ABSTRACTS + INDEXES, AMERICAN CHEMICAL SOCIETY. COLUMBUS, US" , CHEMICAL ABSTRACTS + INDEXES, AMERICAN CHEMICAL SOCIETY. COLUMBUS, US XP000158004 ISSN: 0009-2258 * abstract *
- "CHEMICAL ABSTRACTS + INDEXES, AMERICAN CHEMICAL SOCIETY. COLUMBUS, US" , CHEMICAL ABSTRACTS + INDEXES, AMERICAN CHEMICAL SOCIETY. COLUMBUS, US, VOL. 26, NR. 106 XP000319265 ISSN: 0009-2258 * abstract *

## Description

The invention relates to a process for manufacturing a composition made of cement and insulating materials of various kind, adapted to be used with the function of heat and sound-proofing insulating material, particularly in the building field, by utilizing materials of common use and economically cheap, in order to achieve high heat and sound-proofing insulating levels.

From US-A-5851281 is known a process to manufacture a waste material composite for civil constructions, having improved acoustical and thermal insulating capabilities, and an article manufactured with this process. According to one embodiment of this process, waste material particles or fibers are mixed with water to form a mash, a chemical binder is blended with the mash, and mixed in a cementious material and a filler agent. In another embodiment of the process, the chemical binder is added after the filler agent is added, but prior to the cementious material. In yet another embodiment of the process, the mash which comprises water and paper articles is mixed with wheat residue and the chemical binder and then formed into a paper-wheat article which is pressed until cured. Still, in yet another process, rubber particles are heated, blended with the chemical binder, blended with cement, cooled, blended with ash, formed into an article and pressed until cured to form a cement-rubber composite article. The filler agent comprises calcium hydroxide, hydrated lime, carbonated lime or ash. The chemical binder comprises a mixture of water, formaldehyde, acetic acid, iodine, methanol, sodium hydroxide, ammonium carbonate and sodium hyposulfite.

From WO 9855282 is known a method for forming a cement-paper composite article having improved acoustical and thermal insulating capabilities, to be applied in civil constructions, and an article obtained with this method. According to this method, a cement-paper composite article is formed by mixing particlized paper, which may be created by conducting paper through a grinder, with water in a container to form a mash, blending a chemical binder with the mash and then adding cement while in a mixer. Afterwards, a calcium compound such as calcium hydroxide, hydrated lime or carbonated lime is mixed therein and the composite is poured into a mold, extruded, or manually shaped to form a cement-paper composite article. The chemical binder comprises a mixture of water, formaldehyde, acetic acid, iodine, methanol, sodium hydroxide, ammonium carbonate and sodium hyposulfite.

From EP-A-0103195 is known a process for manufacturing a mixed material to be used in building constructions which is fire-resistant and has insulating properties and is composed of organic fiber material, preferably old paper, containing organic binders, of fiber material (mineral wool) obtained from melted minerals and/or fiber dust, of cement and/or gypsum, and of small-sized quartz sand. The manufacturing process is performed by fine-grinding into a proper device a mixture of already ground old paper and mineral wool and the so obtained mass is added with cement and quartz sand and in case also with further additives into another suitable device. The so obtained mixed material is added with water and can be worked in per se known manners so as to obtain shaped parts or coatings.

From FR-A-2700162 is known a composite hydraulic binder-cellulosic granulate for construction materials and a process for manufacturing thereof, wherein the hydraulic binder is a cement and the cellulosic granulate is a wood granulate. The process includes the steps of submitting the cellulosic material to one or more physical and in case also chemical treatments, so as to obtain a granulate not provided with fibers and with small-sized particles ; submitting the so obtained granulate to a surface impregnation treatment by pulverization of an organic material, and subsequent drying thereof, so as to form a layer of the material onto the granulate ; adding the so treated granulate with the selected hydraulic binder ; including one or more mineral fillers into this mixture, and mixing thereof; adding water with this mixture so as to hydrate the binder, with a possible addition of one or more organic fillers, and mixing the same so as to achieve the required consistence for the product to be obtained.

From DE 4132009 is known a construction material for forming common clay, constituted by water and a dry mixture formed by short fiber materials, clay, bad thermal conductive, pourable and swellable construction material, such as saw dust, by hardenable binder such as cement, and quick settable material such as gypsum. The component part obtained with this material can be pumped or sprayed into the site of use.

The invention relates to a process to manufacture a composition made of cement and insulating materials of various kind to form heat and sound-proofing insulations for buildings, which is performed in a manner different than those disclosed by the above references.

The invention will be better understood from the following description, given soley by way of not-limitative example. In the present description it is illustrated a composition made of cement according to the invention, acting as heat and sound-proofing insulating material and adapted to be utilized to provide for heat and sound-proofing insulations for buildings of various kind, in order to reduce as much as possible the losses of heat outwards, with consequent better and more effective heating of the buildings by the heating plants installed on the buildings, as well as to reduce as much as possible the sound transmission from the interior of the buildings outwards, and vice versa. This composition made of cement on a first embodiment thereof is substantially constituted by the following main components :
a) waste materials of various kind and particularly wastes of plastic materials, wastes of elastomeric materials (rubbers etc..). wastes of paper, cardboard, packages of various kind, and with compositions of different materials (for example aluminium and plastic, etc..) and cellulosic-based materials and/or materials with polymeric plastic compositions (poly coupled materials etc..), wastes of woods and woody materials of various kind, inert materials of various kind for building field, glass remainders of various kind. These materials may be utilized separately, namely by utilizing at least any one material of this kind, selected at will, or they may be utilized combined to each other with different and optional combinations of two or more materials of this kind. Likewise, instead of utilizing the above mentioned waste materials there may be also utilized identical materials as not yet worked raw materials, however in this case with economical burdens which are greater than those involved by the use of the waste materials. Obviously, it is also possible to find an advantageous compromise about the use of either the separate waste materials or the separate raw materials, in such case by utilizing a mixture of waste materials and raw materials, thus without departing from the protection sphere of the present invention. It is also to point out that whichever material is utilized for the present composition, waste materials or raw materials, these materials shall not contain metallic materials, or, in the case in which they contain metallic materials such for example in the case of plastic materials containing metallic reinforcing fillers, these metallic materials should be restricted to extremely reduced percentages thereof, in order to avoid that the composition made of cement obtained with these materials has heat and sound conductivity characteristics, which are given by the presence of metallic materials, such that to prevent to obtain insulations with high heat and sound-proofing characteristics. To this purpose, it is proper to check carefully the percentage of any metallic material contained in the present composition of cement, and to bring it as low as possible, compatibly with the achievement of an effective heat and sound-proofing insulation in accordance with the standards in force at the present.
b) Binder materials of various kind for building field such as : cement, limes, gypsum, of various kind, epoxy and/or acrylic resins and resins of various kind for building field.
   These materials may be utilized separately, namely by utilizing at least any one material of this kind, selected at will, or they may be utilized combined to each other with different combinations of two or more materials of this kind.
c) Water,
d) Organic or inorganic surface-active substances of per se known type.

The present composition of cement is obtained by mixing to each other the above mentioned main components, at different and variable percentages thereof, of which the components under point a) are ground in advance to have small-sized particles, and wherein the water serves to amalgamate together the different components and the surface-active substances serve to provide for the absorption and aeration of water from the different components mixed together, so as to permit the composition of cement to be directly delivered on the site where the same composition is poured, in the manner which will be hereinafter described. This composition of cement is utilized to provide for heat and sound-proofing insulations for buildings, by applying it directly into contact of both the floor of ambients (rooms, attics, cellars, balconies, garages etc..) and the walls of these ambients. Then, in the first case this composition of cement is applied on to the concrete floor slab lying below it and already provided on the buidings, and the conventional layer of cement is then applied thereon, which performs the function of heat and sound-proofing insulation, thereby permitting any previously used insulating panel to the eliminated, as well as to eliminate the consequent operations for fixing them on position. On the contrary, in the second case such composition of cement is applied directly against the inner wall of the inner partition walls or the outer walls of the buildings, by permitting the previously used insulating panels to be eliminated, and consequently to eliminate the needed operations for fixing them on position, and the so obtained heat and sound-proofing insulation is then covered by the conventional parging. Moreover, the present composition of cement may be also made shaped as panels, by pouring all the utilized components into adequate dies or formworks of various types, shapes and sizes, where they are kept for times sufficient to let them to harden, with subsequent drawing of the obtained panels and use thereof on the requested application positions, in which these panels are applied by means of glueing and/or fixing means of conventional type. Now, it is further described the process for manufacturing the composition of cement according to this first embodiment of the present invention. First of all, the materials under point a) are found, which materials are employed separately, namely by employing at least one material at will of this kind, or they are employed in combination to each other, namely with combinations at will of any material, and all the used materials are ground in advance to form small-sized particles, of an average range of about 8 mm, by means of grinding mills or other apparatuses of conventional type suitable to this purpose, and all the so obtained particles of materials are mixed together at ambient temperature, by means of mixing machines of conventional type thereby obtaining a mixture of materials of the kind referred to, namely waste materials and/or also virgin raw materials. Afterwards, all the materials constituting this first main component of the present composition of cement are submitted to a sanitary treatment, in order to destroy the bacterial floras and the various micro-organisms present in the same materials, in such amount as to obtain sufficiently sanitarized materials to be able, on the one hand, to be manipulated without danger of infections for the persons coming into contact with the materials, and on the other hand to keep a high resistance to the biological degradation of the biological component which could be present in the same materials. This sanitary treatment step of the materials of the first component of the present composition of cement is performed by making use of suitable methods for this purpose, and preferably by the use of
- ozone ;
- enzymes reacting biologically with the bacteria and the micro-organisms, in a way to provide for the "digestion", namely the partial or total inclusion thereof ;
- radiations of various kind (for example ionizing radiations, beta radiations or gamma radiations on fluid bed, etc..) ;
- steam :

In this case, the sanitary treatment will be performed by utilizing the more advantageous method depending on the types and characteristics of the utilized materials, and the quantity of bacterial colonies and micro-organisms to be destroyed, and such method will involve the selection of the needed treatment time and the types and percentages of the selected sanitarizing agents, in order to minimize as much as possible the concentrations of bacteria and micro-organisms still present on the material at the end of the sanitary treatment. The so sanitary treated materials of said first component of the present composition of cement are then introduced into bags or other suitable containers of plastic or inert materials with proper volumes, and this operation is effected preferably under vacuum condition or under inert atmosphere, but of course it may be performed also on air at ambient temperature. The bags or containers filled with these sanitary treated materials are then loaded on to motor-vehicles and transported towards and unloaded on the sites of use of the same materials. Afterwards, these sanitary treated materials are extracted from the relative containers and mixed with any one material or one combination of materials under point b), with the water (point c) and any one or one combination at will of the utilized surface-active substances (point d), thereby providing for an aerated cellular mixture ready to be used, which is introduced into concrete mixers or other suitable mixers mounted on to motor-vehicles, which provide for a continuous agitation thereof, to make it available and pennit it to be subsequently delivered on a fluid form in the sites of uses, which delivery is performed by pumping the same mixture through hoses joined to the relative concrete mixer and maneuverable manually. Likewise, such composition of cement may be delivered in the same way also into dies, formworks or the like to form corresponding insulating panels which, after the poured material has.been hardened, are applied on the relative installation positions. Preferably, this composition of cement is obtained with the following volume percentages of the different employed components: components under point a) about 50-75% volume, components under point b) about 15-25% volume, component under point c) about 9-15% volume, component under point d) about 1% volume, but of course also different percentages of the utilized component materials may be employed. In this way, with this criterion it is possible to obtain heat and sound-proofing insulating materials directly on the place, by utilizing waste materials less expensive than the virgin materials, without the need to prepare particular insulating panels with materials of common use and to apply them on position. The so realized articles are lighter than the concrete. It has been also found that the insulating materials obtained with the composition of cement according to the invention allow to have sound level reductions comprised between 19 and 25 dB on a slab of composition of cement having 5 cm thickness applied on to floors, and a heat insulation coefficient K = 1.03 newton. This composition of cement on a second embodiment thereof is substantially constituted by the following main components :
a) waste materials of various kind, like those described under previous point a) ;
b) binder materials of various kind for building field, such as : concrete, limes, gypsum, of various kind, epoxy and/or acrylic resins and resins of various kind for building field ;
c) water ;
d) organic or inorganic surface-active substances of per se known type.
   The manufacturing process according to the invention, to prepare the composition of cement in accordance to this second embodiment is described hereinafter. Also in this case, at first there are found the materials under point a), which are employed separately namely by utilizing at least one material at will of this kind, or they are employed in combination to each other, namely with combinations at will of any material, and all the used materials are ground, treated and mixed like previously. Afterwards, all the materials constituting this first main component of the present composition of cement are submitted to at least one of the following heat temperature workings :
   a) densifying ;
   b) sintering ;
   c) extrusion
by utilizing machines, equipments and plants of conventional type and adapted to perform the relative workings, wherein such mixed and ground materials are mixed to each other in an extremely homogeneous manner, by obtaining very small sized material particles and with temperatures comprised between about 100° C and 150° C, depending on the kind of selected working, and by providing for at the same time an anti-bacterial action, thanks to the presence of the high temperature, which action is adapted to destroy the bacterial floras and the various micro-organisms present in the same materials, in such amount as to obtain materials with such characteristics, on the one hand, to be able to be manipulated without danger of infections for the persons coming into contact with the materials, and on the other hand to keep a high resistance to the biological degradation of the biological component which could be present in the same materials. The so treated materials of said first component of the present composition of cement are then introduced into bags or suitable containers of plastic or inert materials with proper volumes, and this operation is performed preferably under vacuum condition or under inert atmosphere, but of course it may be performed also on air at ambient temperature. The bags or containers filled with these treated materials are then loaded on to motor-vehicles and transported towards and unloaded on the sites of use of the same materials. Afterwards, these treated materials are extracted from the relative containers and mixed with any one material or one combination of materials under point b), with the water (point c) and any one or one combination at will of the utilized surface-active substances (point d), thereby providing for an aerated cellular mixture ready to be used, which is introduced into concrete mixers or other suitable mixers mounted on to motor-vehicles, which provide for a continuous agitation thereof, to make it available and permit it to be subsequently delivered on a fluid form in the sites of use, which delivery is performed by pumping the same mixture through hoses joined to the relative concrete mixer and manoeuverable manually. This composition of cement on a third embodiment thereof is substantially constituted by the following main components :
a) waste materials of various kind, like those described under previous points a) ;
b) binder materials of various kind for building field, such as : concrete, limes, gypsum, of various kind, epoxy and/or acrylic resins and resins of various kind for building field ;
   These materials may be utilized separately, namely by employing at least any one material of this kind, selected at will, or they may be utilized combined to each other with different combinations of two or more materials of this kind.
c) water ;
d) bonding agents such as epoxy and/or acrylic resins, resins of various kind for building field or suitable bonding agents of per se known type.

This composition of cement is obtained by mixing together said main components, at different and variable percentages thereof, and treating the same materials in the manner which will be described later, wherein the waste materials described under point a) are ground in advance to have small-sized particles, and wherein the water serves to amalgamate together and to swell the different components and the bonding agents serve to strengthen the composition of cement directly on the place of use, by forming a mixture thereof, in the manner which will be described hereinafter. This composition of cement is utilized for the same previously described purposes and forms. Hereinafter, the process for manufacturing the composition of cement according to this embodiment of the present invention is now described. First of all, the materials under the previous point a) are found, which are employed, treated, ground and mixed like such point a). Afterwards, all the ground and mixed materials of the first component of the present composition of cement are treated at high temperature on to working machines or plants of conventional type, preferably extruders, where these materials are mixed together in an extremely homogeneous manner and extruded, and during this step such materials are heated up to about the softening temperature thereof, in which circumstance the moisture contained in the materials referred to is submitted to a high evaporation and, being absorbed gradually by the mass of softened materials, provide for a progressive swelling of the same mass and a consequent reduction of the specific weight of these materials. Moreover, during this step a pre-established percentage of water can be added to the mass of materials, which percentage of water is sufficient to obtain an effective swelling of the same mass, above all in the case in which the materials have a reduced natural moisture. In this way, when this step is ended, the sanitary treatment of the materials is obtained, to provide for to destroy the bacterial floras and the various micro-organisms present in the same materials, thereby permitting to manipulate these materials without danger for the persons coming into contact therewith. Moreover, at the end of this operative step, the materials are let to cool in a natural way or they may be advantageously cooled on the place by means of cooling plants and devices of conventional type, combined with the operative machines for treatment of the same materials, and when this step is ended the cooled materials are at first additionally ground to have very small-sized and even particles, thereby obtaining powdered materials ready to be used which are then introduced into bags or other suitable containers of plastic or inert materials with proper volumes, and this operation is performed preferably under vacuum condition or under inert atmosphere, but of course it may be performed also on air at ambient temperature. The bags or containers filled with these sanitary treated materials are then loaded on to motor-vehicles and transported towards and unloaded on the sites of use of the same materials. Afterwards, these sanitary treated materials are extracted from the relative containers and mixed with adequate percentages thereof with any one bonding agent or one combination of bonding agents under point d), thereby providing for a mixture thereof ready to be used, to which water and other possible reactants are added, with adequate percentages thereof, to respectively amalgamate the mixture and facilitate the adhesive action of the bonding agents, thereafter such mixture is distributed adequately on the places of use, either manually or by means of adequate machines adapted to perform this function. This mixture may be obtained also by mixing the above mentioned binder materials, bonding agents, water and any possible reactant with the waste materials under point a), directly during the step of grinding thereof, and in such case it is submitted subsequently at a high temperature into the above described machines or plants and then sacked and transported on the places of use. Likewise, such composition of cement may be delivered to form corresponding insulating panels as described above. This composition of cement is obtained with the following volume percentages of the different used components : components a) about 50-75% volume, components b) about 15-25% volume, component c) about 9-15% volume, component d) about 1% volume, but of course also different percentages of the employed component materials may be utilized. In this way, with this criterion it is possible to obtain heat and sound-proofing insulating materials directly on the place of use, by utilizing waste materials which are less expensive than the virgin materials, without the need to prepare particular insulating panels with commonly used materials and to apply them on position. The so realized articles are lighter than the concrete. Also the insulating materials obtained with this composition of cement allows to have the previously described same performances.

## Claims

1. Process for manufacturing a composition of cement made of insulating materials of various kind, which can be particularly used on the buildings to obtain heat and sound-proofing insulations, to be applied on to floors and walls of such buildings, the composition being constituted by the following combined and mixed main components :
a) a first component formed by waste materials of various kind, ground in advance to have small-sized particles, and constituted preferably by wastes of plastic materials, wastes of elastomeric materials, wastes of paper, cardboard, packages of various kind and with compositions of different materials, with very small or without percentages of metallic materials, and cellulosic-based materials and/or materials with polymeric plastic compositions, wastes of woods and woody materials of various kind, inert materials of various kind for building field, glass remainders;
b) a second component formed by binder materials of various kind for building field such as cement, limes, gypsum, of various kind, epoxy and/or acrylic resins of various kind ;
c) a third component formed by water, **characterized by** the following working steps :
- treating the ground materials of said first component, so as to destroy almost completely the bacterial flora and the various micro-organisms, such treatment being effected by means of sanitary treating means such as ozone, biologically reacting enzymes, radiations of various kind, for example ionizing radiations, beta radiations or gamma radiations on fluid bed, steam, or by means of a high temperature treatment;
- introduction of the ground and sanitary treated materials into bags or similar containers, and transport and unloading them on the place of use ;
- extraction from the relative containers of said ground and sanitary treated materials, and mixing thereof with said second and third component and with a fourth component, formed either by organic and inorganic surface-active substances of per se known type, or by bonding agents of per se known type ;
- introduction of the materials mixed with said organic and inorganic surface-active substances into concrete mixers or suitable mixers mounted on to motor-vehicles, where they are kept being continuously agitated and finally delivered by pumping the same mixture in the sites of use, the materials mixed with said bonding agents being added with water and other possible reactants and distributed in the places of use, either manually or by means of adequate machines adapted to perform this function.

2. Process according to claim 1, **characterized in that** the high temperature treatment of the materials to be mixed with said organic and inorganic surface-active substances is effected with at least one of the following heat temperature workings :
- densifying,
- sintering,
- extrusion
by utilizing machines, equipments and plants of conventional type and adapted to perform the respective workings, with temperatures comprised between about 100° C and 150° C, depending on the kind of selected working, and by subsequent natural cooling or artificial cooling of said material mass by means of per se known cooling means.

3. Process according to claim 1, **characterized in that** the high temperature treatment of the materials to be mixed with said bonding agents is effected on to working machines or plants of conventional type, preferably extruders, and during this step the materials are heated up about to the softening temperature thereof, and a pre-established percentage of water can be added to the mass of materials, and at the end of this step the materials are let to cool in a natural way or by means of cooling plants and devices of conventional type, and are additionally ground to have very small-sized particles.

4. Process according to claim 3, **characterized in that** the mixture of said binder materials, bonding agents and water and any possible reactant with said waste materials may be obtained directly during the grinding step thereof, and subsequently submitted to said high temperature treatment.

5. Process according to claims 1, 2 or 3, **characterized in that** said materials treated by means of said sanitary treating means or said high temperature treatment are introduced into bags or containers preferably under vacuum condition or under inert atmosphere or also on air at ambient temperature.

6. Process according to claim 1, **characterized in that** said first component may be constituted also by identical materials in the form of virgin raw materials, utilized separately or combined with said waste materials.

7. Process according to claim 1, **characterized in that** the materials of said first and second component may be utilized separately, namely by utilizing at least one material for each one of said first and second component, or by employing together with different combinations two or more materials of any kind for each one of said first and second component.

8. Process according to claim 1, **characterized by** the following preferred compositions of said component materials : first component about 50-75% volume, second component about 15-25 % volume, third component about 9-15% volume, fourth component about 1% volume.

## Patentansprüche

1. Verfahren zur Herstellung einer Mischung aus Zement, gemacht aus isolierenden Materialien verschiedener Art, die insbesondere an Bauwerken verwendbar ist, um Wärme- und Schallisolierungen zu erhalten, und auf Böden und Wände dieser Bauwerke aufbringbar ist, wobei die Mischung durch die folgenden kombinierten und gemischten Hauptkomponenten gebildet wird:
a) eine erste Komponente, die durch Abfallmaterialien verschiedener Art gebildet wird, die zuvor zerkleinert worden sind, um Partikel kleiner Größe zu erhalten, und bevorzugt durch Abfälle von Kunststoffmaterialien, Abfälle von elastomeren Materialien, Abfälle von Papier, Karton, Verpackungen verschiedener Art und mit Mischungen verschiedener Materialien gebildet ist mit einem sehr kleinen oder keinem Prozentsatz von metallischen Materialien und Zellulose-basierten Materialien und/oder Materialien mit potymerischen Kunststoffmischungen, Abfällen von Holz und hölzernen Materialien verschiedener Art, inerten Materiellen verschiedener Art für das Bauwesen, Glasresten;
b) eine zweite Komponente, die durch Bindermaterielien verschiedener Art für das Bauwesen gebildet ist wie Zement, Kalk, Gips verschiedener Art, Epoxiharze und/oder Acrylharze verschiedener Art;
c) eine dritte Komponente, die durch Wasser gebildet ist, **gekennzeichnet durch** die folgenden Arbeitsschritte:
- Behandeln der zerkleinerten Materialien der ersten Komponente, um nahezu vollständig die bakterielle Flora und die verschiedenen Mikroorganismen zu zerstören, wobei diese Behandlung **durch** Hygienebehandtungsmittel ausgeführt wird wie Ozon, biologisch reagierende Enzyme, Bestrahlungen verschiedener Art, beispielsweise ionisierende Bestrahlungen, seta-Bestrshlungen oder Gamma-Bestrahlungen auf Fluldbett, Dampf oder mittels einer Hochtemperaturbehandlung;
- Einführen der zerkleinerten und Hygiene-behandelten Materialien in Beutel oder ähnliche Behälter, Transportieren und Entladen derselben am Ort der Benutzung;
- Entnehmen der zerkleinerten und Hygiene-behandelten Materialien aus den jeweiligen Behältern und Mischen derselben mit der zweiten und dritten Komponente und mit einer viarten Komponente, die entweder **durch** organische oder anorganische oberflächenaktive Substanzen eines an sich bekannten Typs oder **durch** Verbindungsmittel eines an sich bekannten Typs gebildet ist;
- Einführen der mit den organischen und anorganischen oberflächenaktiven Substanzen gemischten Materialien in Betonmischer oder geeignete Mischer, die auf Kraftfahrzeugen befestigt sind, wo sie kontinuierlich gemischt werden und schließlich **durch** Abpumpen des Gemischs an den Orten der Benutzung geliefert werden, wobei den mit den Verbindungsmitteln gemischten Materialien Wasser und andere mögliche Reaktionsmittel hinzugefügt werden und diese an den Orten der Benutzung entweder manuell oder mittels adäquater Maschinen verteilt werden, die für diese Funktion geeignet sind.

2. Verfahren nach Anspruch 1,
**dadurch** gekertnzeichnet,
daß die Hochtemperaturbehandlung der Materialien, die mit den organischen und anorganischen oberflächenaktiven Substanzen zu mischen sind, mit wenigstens einer der folgenden Hochtemperaturbearbeitungen erfolgt:
- Verdichten,
- Sintern,
- Extrudieren
durch Verwendung von Maschinen, Geräten und Anlagen konventionellen Typs, die zur Durchführung der jeweiligen Bearbeitungen mit Temperaturen zwischen etwa 100°C und 150°C geeignet sind in Abhängigkeit von der Art der ausgewählten Bearbeitung, und durch nachfolgendes natürliches Abkühlen oder künstliches Abkühlen der Materialmasse mittels an sich bekannter Kühlmittel.

3. Verfahren nach Anspruch 1,
**dadurch gekennzeichnet,**
**daß** die Hochtemperaturbehandlung der Materialien, die mit den Verbindungsmitteln zu mischen sind, durch Bearbeitungsmaschinen oder Anlagen herkömmlichen Typs, vorzugsweise Extrudern, erfolgt, und daß während dieses Schritts die Materialien etwa bis zu ihrem Erweichungspunkt erwärmt werden und ein vorbestimmter Prozentsatz von Wasser der Masse der Materialien hinzugefügt werden kann, und daß am Ende dieses Schritts die Materialien belassen werden, um auf natürliche Weise oder mittels Kühlanlagen und Vorrichtungen herkömmlicher Art abzukühlen, und zusätzlich zerkleinert werden, um sehr kleine Partikel zu haben.

4. Verfahren nach Anspruch 3,
**dadurch gekennzeichnet,**
**daß** das Gemisch aus den Bindermuterilien, Verbindungsmittel und Wasser und jedes möglichen Reaktionsmittels mit den Abfallmaterialien direkt während dessen Zerkleinerungsschritts erhalten werden kann und danach der Hochtemperaturbehandlung unterworfen wird.

5. Verfahren nach Anspruch 1, 2 oder 3,
**dadurch gekennzeichnet,**
**daß** die Materialien, die mittels der Hygiene-Behandlungsmittel oder der Hochtemperaturbehandlung behandelt sind, im Beutel oder Behälter vorzugsweise unter Vakuumbedingungen oder einer inerten Atmosphäre oder auch bei Luft mit Umgebungstemperatur eingebracht werden.

6. Verfahren nach Anspruch 1,
**dadurch gekennzeichnet,**
**daß** die erste Komponente auch durch identische Materialien in der Form von neuen Rohmaterialien gebildet werden kann, die getrennt oder kombiniert mit den Abfallmateriallen verwendet werden.

7. Verfahren nach Anspruch 1,
**dadurch gekennzeichnet,**
**daß** die Materialien der ersten und der zweiten Komponente getrennt verwendet werden können, nämlich durch Verwendung von wenigstens einem Material für jede der ersten und zweiten Komponente oder durch gemeinsame Verwendung mit verschiedenen Kombinationen zweier oder mehr Materialien jeder Art für jede der ersten und zweiten Komponente.

8. Verfahren nach Anspruch 1,
**gekennzeichnet durch** die folgenden bevorzugten Verbindungen der Materialkomponenten: erste Komponente etwa 50 bis 75 Vol.-%, zweite Komponente etwa 15 bis 25 Vol.-%, dritte Komponente etwa 9 bis 15 Val.-%, vierte Komponente etwa 1 Vol.-%.

## Revendications

1. Procédé pour fabriquer une composition de ciment en matériaux isolants de diverses sortes, qui peut être tout particulièrement utilisée dans les bâtiments pour obtenir des isolations thermiques et phoniques, à appliquer sur les planchers et les murs de ces bâtiments, la composition étant constituée des composants principaux combinés et mélangés suivants :
a) un premier composant formé de matériaux résiduels de diverses sortes, broyés à l'avance pour obtenir des particules de petite taille, et constitué de préférence de déchets de matériaux plastiques, de déchets de matériaux élastomères, de déchets de papier, de carton, d'emballages de diverses sortes et avec des compositions de différents matériaux, avec des pourcentages très bas voire nuls de matériaux métalliques, et de matériaux à base de fibres cellulosiques et/ou de matériaux ayant des compositions plastiques polymères, des déchets de bois et des matériaux ligneux de diverses sortes, des matériaux inertes de diverses sortes dans le domaine de la construction, des restes de verre;
b) un deuxième composant formé par des matériaux liants de diverses sortes dans le domaine de la construction, tels que le ciment, la chaux, le gypse, de diverses sortes, les résines époxydes et/ou acryliques de diverses sortes;
c) un troisième composant formé par l'eau,
**caractérisé par** les étapes de travail suivantes :
- le traitement des matériaux broyés dudit premier composant de manière à détruire presque complètement la flore bactérienne et les divers micro-organismes, ce traitement étant effectué à l'aide de moyens de traitement sanitaire, tels que l'ozone, les enzymes à activité biologique, les rayonnements de toutes sortes, par exemple les rayonnements ionisants, les rayonnements bêta ou les rayonnements gamma sur lit fluidisé, la vapeur d'eau, ou à l'aide d'un traitement à température élevée;
- l'introduction des matériaux broyés et traités sanitaires dans des sacs ou des récipients similaires, et leur transport et leur déchargement sur le lieu d'utilisation;
- l'extraction des récipients concernés desdits matériaux broyés et traités sanitaires et leur mélange avec lesdits deuxième et troisième composants et avec un quatrième composant formé par des substances tensioactives organiques et inorganiques de type connu en soi ou par des agents liants de type connu en soi; et
- l'introduction des matériaux mélangés auxdites substances tensioactives organiques et inorganiques dans des mélangeurs de béton ou des mélangeurs appropriés montés sur des véhicules à moteur, où ils sont maintenus sous agitation continue et finalement délivrés par pompage du même mélange dans les sites d'utilisation, les matériaux mélangés auxdits agents liants étant additionnés d'eau et d'autres agents réactifs possibles et distribués dans les emplacements d'utilisation, manuellement ou à l'aide de machines adéquates adaptées pour effectuer cette fonction.

2. Procédé selon la revendication 1, **caractérisé en ce que** le traitement à température élevée des matériaux à mélanger auxdites substances tensioactives organiques et inorganiques est effectué avec au moins l'un des travaux à température élevée suivants :
- densification,
- frittage,
- extrusion
en utilisant des machines, des équipements et des installations de type classique et adaptés pour effectuer les travaux respectifs, avec des températures comprises entre environ 100°C et 150°C, en fonction du type de travail choisi et par un refroidissement suivant naturel ou artificiel de ladite masse de matériaux à l'aide de moyens de refroidissement connus en soi.

3. Procédé selon la revendication 1, **caractérisé en ce que** le traitement à température élevée des matériaux à mélanger auxdits agents liants est effectué sur des machines de travail ou dans des installations de type classique, de préférence des extrudeuses, et, au cours de cette étape, les matériaux sont chauffés jusqu'à environ leur température de ramollissement, et un pourcentage préétabli d'eau peut être ajouté à la masse de matériaux et, à la fin de cette étape, les matériaux sont laissés à refroidir de manière naturelle ou à l'aide d'installations et de dispositifs de refroidissement de type classique et sont encore broyés pour obtenir des particules de très petites tailles.

4. Procédé selon la revendication 3, **caractérisé en ce que** le mélange desdits matériaux liants, agents liants et eau et de tout réactif possible avec lesdits matériaux résiduels peut être directement obtenu au cours de son étape de broyage et être soumis ensuite audit traitement à température élevée.

5. Procédé selon les revendications 1, 2 ou 3, **caractérisé en ce que** lesdits matériaux traités à l'aide de moyens de traitement sanitaires ou dudit traitement à température élevée sont introduits dans des sacs ou des récipients de préférence sous vide ou sous atmosphère inerte ou également sous air à température ambiante.

6. Procédé selon la revendication 1, **caractérisé en ce que** ledit premier composant peut être également constitué de matériaux identiques sous la forme de matériaux bruts vierges utilisés séparément ou en combinaison avec lesdits matériaux résiduels.

7. Procédé selon la revendication 1, **caractérisé en ce que** les matériaux desdits premier et deuxième composants peuvent être utilisés séparément, à savoir en utilisant au moins un matériau pour chacun desdits premier et deuxième composants, ou en employant, conjointement avec différentes combinaisons, deux matériaux ou plus de toute sorte pour chacun desdits premier et deuxième composants.

8. Procédé selon la revendication 1, **caractérisé par** les compositions préférées suivantes desdits matériaux constituants : premier composant environ 50 à 75% en volume, deuxième composant environ 15 à 25% en volume, troisième composant environ 9 à 15% en volume, quatrième composant environ 1% en volume.
